# EUROPEAN PATENT APPLICATION

(11) **EP 4 644 855 A1**
(43) Date of publication of application: **05.11.2025**
(21) Application number: 24174103.2
(22) Date of filing: 03.05.2024
(51) Int. Cl.: G01L 1/12, G01L 5/22, B25J 13/08

(54) **A SENSOR ARRANGEMENT COMPRISING SOFT FORCE SENSORS**

(71) Applicant: Melexis Technologies SA, 2022 Bevaix (CH)
(72) Inventor: DIDDEN, Jeroen, 3980 Tessenderlo-Ham (BE); CLOSE, Gael, 2022 Bevaix (CH); LE SIGNOR, Théo, 2022 Bevaix (CH); DUPRÉ, Nicolas, 2022 Bevaix (CH); HILIGSMANN, Vincent, 3980 Tessenderlo-Ham (BE)
(74) Representative: Bardehle Pagenberg Partnerschaft mbB Patentanwälte Rechtsanwälte

(57) **Abstract**

A sensor arrangement for measuring a force is provided. The sensor arrangement comprises two or more soft sensor elements and a body, wherein the two or more soft sensor elements are at least partially located within the body and wherein the body comprises one or more openings. A contact portion of each of the two or more soft sensor elements extends through the one or more openings in the body, and the body is at least partially made of a material limiting the deformation of the contact portion of each of the two or more soft sensor elements when a force is applied to the sensor arrangement. Further, a method for manufacturing a corresponding sensor arrangement is provided.

## Description

### TECHNICAL FIELD

The invention of the current application relates to an arrangement of soft force sensors with deformation limitation that avoids damages and a corresponding method for manufacturing such a sensor arrangement.

### BACKGROUND

A force sensor returns an electronic signal proportional to the mechanical force applied to the sensor. It can also be said that a force sensor converts the magnitude of applied force into a related electronic signal. The forces measured can be mechanical quantities such as tension, pressure, weight, torque, strain, and interior stress. Force sensors have become indispensable core components of power equipment, engineering machinery, various working machines, and industrial automation systems.

Nowadays force sensors have a wide field of application from the automotive industry to the medical sector.

For example, using existing force sensors, the forces applied to workpieces during an automatized manufacturing process can be measured in real time to control the force exerted upon the workpiece. In this way, the force-load of the workpieces can be controlled, and potentially limited, during the manufacturing process. This is in particular important when the workpiece is sensible.

However, measuring a force can also be important when the stiffness of an object shall be determined, since stiffness is defined as the extent to which an object resists deformation in response to an applied force.

Often times, the force sensors are used together with multi-axis robotic devices to move, position, hold, or sense objects. A multi-axis robotic device may, for example, include a robotic finger or a gripper. A robotic finger is like a humanoid finger but can be moveable in more directions. At the tip of the finger a force sensor can be applied, which allows to sense an object. A gripper is a mechatronic device, which exerts a force and a corresponding counterforce onto an object. Thereby, the force and the counterforce press the object against respective parts of the gripper such that the object and the respective gripper parts come into contact.

In some applications of force sensors, it is desired to perform force measurements with spatial resolution, which may improve accuracy of the measurement or can be used for early detection of grip loss, e.g. due to a slip condition. Force measurements may be performed in a spatially resolved manner by using a plurality of soft sensor elements that are distributed in the area where the force is to be measured, e.g. over the working surface of the gripper. If a large number of soft sensor elements is used, a large amount of the grip is being performed by the soft sensor elements, meaning that the soft sensor elements can experience large forces themselves. In some cases, these forces that are acting on the soft sensor elements may damage the soft sensor element, e.g. by inelastic deformation of the deformable element or by stress being applied onto the sensitive components of the sensor element.

Hence, there is a need in the art to provide a sensor arrangement for measuring a force that is capable of withstanding larger forces while maintaining a high sensitivity of the sensor arrangement.

### SUMMARY

The abovementioned needs are addressed by a sensor arrangement for measuring a force according to the invention. The sensor arrangement comprises two or more soft sensor elements and a body. Generally, any number of soft sensor elements may be used in the sensor arrangement according to the invention. In some applications, two soft sensor elements may be used while in other applications, a plurality (i.e. three or more) of soft sensor elements may be used. A soft force sensor or soft sensor element as used throughout this application refers to a combination of a sensor, which is capable of measuring deformation of an element. As the measuring of the deformation may be done contactless (e.g. by using a magnetic field), the sensor and the element that experiences the deformation do not necessarily need to be in physical contact with one another. In other words, there may be a barrier between the sensor and the deformable element.

The two or more soft sensor elements are at least partially located within the body. The body comprises one or more openings and a contact portion of each of the two or more soft sensor elements extends through the one or more openings in the body. An opening can be defined as a space of the body in which no material of the body is located or only a thinner layer of the material of the body. The opening may have a dimension and size corresponding to the dimension and size of the portion of the soft sensor element, which extends through the opening. It is however also contemplated, that the dimension and size of the opening at least slightly differs from the dimension and size of the portion of the soft sensor element extending through the opening, e.g. being slightly larger in dimension and size.

A contact portion of the soft sensor element is a portion of the soft sensor element to which a force is applied during a force measurement with the soft sensor element. The contact portion may be a portion of a deformable element of the soft sensor element to enable a force measurement by registering the deformation of the deformable element. Alternatively, the contact portion may be connected to a deformable element. Further, the body is at least partially made of a material limiting the deformation of the contact portion of each of the two or more soft sensor elements when a force is applied to the sensor arrangement.

In limiting the deformation of the contact portion of the soft sensor element, the body provides protection of the two or more soft sensor elements. For example, the body may not affect the deformation of the contact portion of the soft sensor elements up to a certain amount of deformation and prevents any further deformation when the force increases. This way, the capability of the sensor arrangement to measure a force is not adversely affected and at the same time once the force exceeds a threshold, the body of the sensor arrangement prevents any further deformation of the contact portion of the soft sensor elements.

In the following, preferred embodiments of the sensor arrangement according to the invention will be described in more detail.

In some preferred embodiments, the two or more soft sensor elements may form an array, such as a line or a grid. While other irregular arrangements of the two or more soft sensor elements may be used in some embodiments, arranging the soft sensor elements in form of an array improves the spatial resolution of the sensor arrangement. For example, each soft sensor element of the array may correspond to a (spatial) pixel of a multi-pixel sensor arrangement. The distance of adjacent soft sensor elements of the array represents the spatial resolution of the multi-pixel sensor. As the skilled person will appreciate, it may be possible that more than one soft sensor element may be associated with a single pixel. For example, more than one sensor element may be associated with a single pixel and each sensor element may be capable of measuring a magnetic field in a particular direction. In some examples, three sensor elements may be provided for each pixel, namely a first sensor element being capable of measuring magnetic field component Bₓ, a second sensor element being capable of measuring magnetic field component B_{y}, and a third sensor element being capable of measuring magnetic field component B_{z}.

In some embodiments, each pixel may comprise two or more sensor elements capable of measuring the same magnetic field component(s). Thereby, gradient or differential measurements may be enabled, for example within each pixel, which may improve the accuracy of the measurement and robustness to external perturbation magnetic fields. For example, each spatial pixel may comprise four clusters of sensor elements, each cluster being equipped with one or more sensor elements capable of measuring up to three spatial magnetic field components Bₓ, B_{y}, and B_{z}. These four clusters of sensor elements may be arranged in a planar manner in the corners of a square. In some preferred embodiments, differential measurements may be performed between the sensor elements of the clusters associated with a single pixel. However, depending on the field of application, it may be possible to perform differential measurements between the pixels.

In some preferred embodiments, a soft sensor arrangement according to the invention may comprise a sensor, a deformable element, and an element for reacting with the sensor. The element for reacting with the sensor may consist of a single element or a plurality of elements. The deformable element may be deformable and may extend at least partially between the sensor and the element. An element is deformable when it undergoes a change of shape and/or volume, when an external force acts onto the element. Thereby, deformable can also mean that the element returns to its originally shape and/or volume once the external force does not act upon the element anymore.

During operation, an object exerts a force onto the sensor element. Thereby, either the element for reacting with the sensor or the deformable element can come into contact with the object. The location where the contact is established may be referred to as contact portion. The contact portion may in some preferred embodiments be a portion of the deformable element. The contact can be direct or indirect. The element for reacting with the sensor or the deformable element may as such be in direct or indirect contact with the object. In case of a direct contact, at least one surface of the element or the deformable element touches at least one surface of the object. In case of an indirect contact, at least some other part is in between the contact surfaces. For the element for reacting with the sensor, this may be the deformable element itself, such that the element is in indirect contact with the object, but the deformable element is in direct contact. In this case it can also be said that the element for reacting with the sensor is embedded in the deformable element. Thereby, the element may be partially or fully embedded in the deformable element. In the latter case, all surfaces of the element are in contact with the deformable element. It can also be said that the material of the deformable element surrounds the element. The other way around, if the deformable element is in indirect contact with the object, the element may be in direct contact with the object. It is however also encompassed that other pieces are in direct contact with the object, whereas the element as well as the deformable element are only in indirect contact with the object. For example, the element may be embedded in a piece of plastic, which is contacting the deformable element. In another example, the piece of plastic is still contacting the deformable element and the object, but the element is embedded in the deformable element, or the element is contacting the deformable element and the piece of plastic. In all three cases, the object will directly contact the piece of plastic but neither the element nor the deformable element directly.

Since the deformable element extends at least partially between the sensor and the element for reacting with the sensor or even surrounds the element, it holds the element in a particular position with respect to the sensor. This position may be defined as a first position of the element with respect to the sensor. It can also be said that the deformable element holds the element in a particular distance from the sensor. If the deformable element is deformed, the element as such performs a coaligned movement in the direction of deformation of the deformable element. If the deformation is a compression, then the distance of the element to the sensor is decreased, whereas if the deformation is a tension, then the distance is increased.

Deformation of the deformable element means that at least one spatial extension of the deformable element is changed in at least one respective spatial dimension. As such, the deformable element of the sensor arrangement may be soft in the sense that is it deformable. The deformability and in particular how much the deformable element can be deformed depends upon the material used for the deformable element. For example, the deformable element can be made of a flexible material. A flexible material is a material which returns to its initial shape once the external force is released. Hence, the deformable element may return to its initial shape if any external force is released. Therefore, the deformable element may also be called a flexible element or an elastic element. In another example, the deformable element may be an elastomer. An elastomer is typically made of monomers linked by weak intermolecular forces. Due to the weak intermolecular forces of the chemical elements of the elastomer, conformational changes of the compounds are possible without or with only partially breaking covalent bonds. This results in that an elastomer may be both viscous and elastic at the same time. Therefore, an elastomer may be deformed by an external force. In other examples, the deformable element may be a polymer, a rubber or a vulcanizate.

The deformation of the deformable element causes the element to move to a second position different to the first position. If the deformable element is compressed, then the second position of the element is closer to the sensor than the first position of the element. If a tension force is applied, then the second position of the element is further away from the sensor than the first position. The change of position can be detected by the sensor of the sensor arrangement by reacting with the element. When reacting with the sensor, the element influences the measurement of the sensor. It could also be said that the element couples with the sensor through a physical effect, which is characteristic of the sensor and the element. This coupling of the element with the sensor depends on the position of the element with respect to the sensor. It could also be said that through the position-dependent coupling, the measurement of the sensor is a unique function of the position of the element with respect to the sensor. In this sense it can be said that the sensor as used in the sensor arrangement is a distance measuring sensor. Such a sensor returns an electronic signal proportional to the position of the element with respect to the sensor.

If no external force is applied to the sensor arrangement, the deformable element is not deformed and the element is located at the first position with respect to the sensor. Hence, a first signal can be measured by the sensor, which corresponds to a zero-force measurement. If a finite external force is applied to the element, the deformable element is deformed, and the element moves to the second position different from the first position. This second position of the element with respect to the sensor leads to a second signal of the sensor, which corresponds to the applied external force. Since the first and second signals can uniquely be mapped to the respective applied external forces, the distance measurements allow to determine the applied external force. In other words, the force applied to the sensor arrangement may be measured by the amount of displacement of the element, when the force deforms the deformable element. Since a change of the interaction of the element with the sensor can be measured with high accuracy, a high accuracy measurement of the applied force can be undertaken. In other words, an alteration of the influence of the element on the sensor allows to infer the external stimulus leading to the alteration, namely the applied external force. For example, as described above, the sensor may be sensitive to the displacement of the element with respect to the sensor.

In these preferred embodiments, the contact portion of a respective soft sensor element may be a portion of the deformable element or may be connected to the deformable element.

In some preferred embodiments, the two or more soft sensor elements may share the deformable element or in other words, the deformable element of the two or more soft sensor elements of the sensor arrangement may be a common deformable element. This means that the deformable element extends between multiple soft sensor elements, thereby connecting respective pairs of sensors and elements for reacting with the sensors (e.g. magnets).

According to the invention, the body is at least partially made of a material limiting the deformation of the contact portion of each of the two or more soft sensor elements. This may be achieved in that the body may be stiffer than the deformable element. For example, the material of the body that limits the deformation of the contact portion of the two or more soft sensor elements may have a higher Young's modulus than the deformable element. The Young's modulus is a mechanical property of a solid material and can be used as a measure to describe the material's compressive stiffness in a particular direction when a force is applied in this direction. A high Young's modulus corresponds to a stiff material (i.e. length increase of the material is low when a force is applied), whereas a low Young's modulus corresponds to a less stiff material (i.e. length increase of the material is higher when the same force is applied).

In some preferred embodiments, the at least one element for reacting with the sensor of the two or more soft sensor elements may be formed by a magnetic material being located within the deformable element of the respective soft sensor element. The magnetic material may include bulk magnets or magnetic particles. The magnetic particles may be a powder of a magnetic material (hereinafter magnetic powder). In some embodiments, the magnetic powder may be evenly distributed within the deformable element, while the concentration of the magnetic powder may be inhomogeneous in other embodiments. In the latter, the concentration of the magnetic powder may be higher in the area in which a sensor is located.

The magnetic material may have a non-temporary magnetization. For example, the magnetic material may at least partially be made of a permanent magnetic material. Additionally or alternatively, the magnetic material may at least partially be made of a remanent magnetic material. In other words, during operation of the sensor arrangement, the magnetic material has a remanent magnetization without an external magnetic field being applied. However, this does not mean that magnetization cannot be evoked or restored by application of an external field when the sensor arrangement is not operating.

In some preferred embodiments, the two or more soft sensor elements may be arranged on a printed circuit board (PCB). Preferably, the two or more soft sensor elements may be arranged on the same PCB. This may allow to control multiple soft sensor elements with a single control unit and thereby may simplify the design of the sensor arrangement. Further, the two or more soft sensor elements arranged on a PCB may be encompassed at least partially by the body. In this case, the body may provide protection of the sensor elements and the PCB from dust, moisture, and other environmental influence.

In some preferred embodiments, the two or more soft sensor elements located at least partially within the body may be surrounded by a support structure. The support structure may be located at least partially within the body. The support structure may protect the sensor elements during manufacturing of the sensor arrangement.

In some preferred embodiments, the body may be made of a mold material. According to the invention, the mold material may limit the deformation of the contact portion of the sensor elements when a force is applied. Preferably, a mold material having a higher Young's modulus than the deformable element may be used. The mold material may provide protection and structural support to the sensor elements. For example, the mold material and the soft sensor elements arranged on a PCB may form a molded package. A molded package is easy to handle by an operator and at the same time provides protection of the sensitive components (e.g. the sensors on the PCB) from environmental influences (e.g. dust, moisture, (ultra-violet) light). The skilled person will appreciate that packaging the body with a mold material may be independently of a sensor of one or more of the soft sensor elements being provided as molded package - in this case, the same or a different mold material may be used for molding the sensor package and molding the body of the sensor arrangement.

In some embodiments when the body is made of mold material, the support structure that may surround the soft sensor elements may protect the sensor elements during the overmolding process during manufacturing of the sensor arrangement.

In some preferred embodiments, the body may comprise a rigid cover, which is overmolded with a mold material. Compared to embodiments in which the body consists only of mold material, the rigid cover may provide improved stability but has a more complex design. The rigid cover may limit the deformation of the deformable element up to higher forces compared to the mold material. Thereby, the rigid cover improves the stability of the sensor arrangement.

The rigid cover may comprise one or more recesses and/or one or more protrusions. The recesses and/or protrusions may be located at the inside of the body and may be used to align the rigid cover and the two or more soft sensor elements. In case that the two or more soft sensor elements are arranged on a PCB, the PCB may comprise protrusions and/or recesses that meshingly engage with recesses and/or protrusions of the rigid cover, thereby aligning the rigid cover and the PCB relatively to one another. Additionally or alternatively, the recesses and/or protrusions may be located on the far side of the rigid cover that does not face the two or more soft sensor elements. In this case, the recesses and/or protrusions may be used to increase the ability of the mold material to attach to the rigid cover.

Any of the abovementioned sensor arrangements according to the invention may be manufactured by a method for manufacturing a sensor arrangement according to the invention. The method according to the invention comprises providing two or more soft sensor elements, and providing a body of the sensor arrangement and arranging the two or more soft sensor elements at least partially inside the body, wherein the body comprises one or more openings.

According to the invention a contact portion of each of the two or more soft sensor elements extends through the one or more openings in the body and the body is at least partially made of a material limiting the deformation of the contact portion of each of the two or more soft sensor elements when a force is applied to the sensor arrangement.

As the skilled person will appreciate, the steps of providing the two or more soft sensor elements, providing the body of the sensor arrangement and arranging the two or more soft sensor elements at least partially inside the body may be interrelated.

For example, some of the steps may be performed at least partially simultaneously. In an example, the two or more soft sensor elements may be arranged relatively to one another (e.g. on a PCB) and the body of the sensor arrangement may be provided by overmolding the PCB at least partially with a mold material, thereby at the same time creating the body and arranging the body relatively to the sensor elements. Furthermore, in some examples, the two or more soft sensor elements may comprise sensors and one or more deformable elements and the deformable elements are only added to the sensor arrangement (e.g. by placing the deformable elements on the PCB) after the sensor elements and the body have been arranged relatively to one another, e.g. by overmolding over by placing the sensor elements in a body. In these examples, the one or more deformable elements may be placed in the one or more openings of the body and connected to the sensors, e.g. by ease of placing the one or more deformable elements on a PCB on which the sensors are located.

In some embodiments, the body is formed directly from mold material. In these cases, the step of providing the body and arranging the two or more soft sensor elements at least partially inside the body may comprise relatively arranging the two or more soft sensor elements and a frame, creating a body of the sensor arrangement from a mold material, and removing the frame from the sensor arrangement. The frame may be used to protect to the soft sensor elements during the manufacturing process. Furthermore, using the frame during the overmolding step and removing the frame after the mold material solidified may generate a clearance between the soft sensor element (e.g. its contact portion) and the solidified mold material, thereby enabling proper operation of the soft sensor element because the contact portion can move when a force is applied and is not clotted with the mold material.

In some other embodiments, additional protection means like a rigid cover or a support structure are added in order to protect the soft sensor elements during the overmolding process. In these cases, the step of providing the body and arranging the two or more soft sensor elements at least partially inside the body may comprise relatively arranging the two or more soft sensor elements and at least one of a rigid cover and a support structure, overmolding the rigid cover and/or the support structure at least partially with a molding material. Further, if a rigid cover is present, the rigid cover may comprise one or more openings, wherein a portion of the deformable element of the two or more soft sensor elements may extend through the one or more openings. If a support structure is present, the support structure may at least partially surround an edge portion of the two or more soft sensor elements. Thereby, the support structure provides protection of the two or more soft sensor elements during the overmolding process.

### BRIEF DESCRIPTION OF THE DRAWINGS

The following description and the annexed figures set forth in detail certain illustrative aspects of the soft sensor arrangement, the gripper, and the respective two methods described above. These aspects are indicative, however, of but a few of the various ways in which the principles of various embodiments can be employed and the described embodiments are intended to include all such aspects and their equivalent.

In the figures, like reference characters generally refer to the same parts throughout the different figures. The figures are not necessarily to scale. Instead, a general focus is put on an explanation of the universal principles of the invention.

In the following description, various embodiments of the invention are described with reference to the following figures:
- FIG. 1: shows a section view of an embodiment example of a soft sensor element that can be used in a sensor array; in the status that is depicted in the figure, no external force is applied to the soft sensor element;
- FIG. 2: shows the section view of the soft sensor element of FIG. 1 with a linear external force applied;
- FIG. 3: shows the section view of the soft sensor element of FIG. 1 with a non-linear external force applied;
- FIG. 4: shows cross-sectional views along perpendicular planes of a first embodiment example of a sensor arrangement;
- FIG. 5: shows cross-sectional views along perpendicular planes of a second embodiment example of a sensor arrangement;
- FIG. 6: shows cross-sectional views of different embodiment examples of a sensor arrangement;
- FIG. 7: shows a cross-sectional view of another embodiment example of a sensor arrangement with an overmolded printed circuit board;
- FIG. 8: shows cross-sectional views of different embodiment examples of a sensor arrangement with a support structure;
- FIG. 9: shows cross-sectional views along perpendicular planes of a third embodiment example of a sensor and (c) a detail view of a cover of the sensor arrangement according to the third embodiment example.

### DETAILED DESCRIPTION

The following detailed description refers to the accompanying figures that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

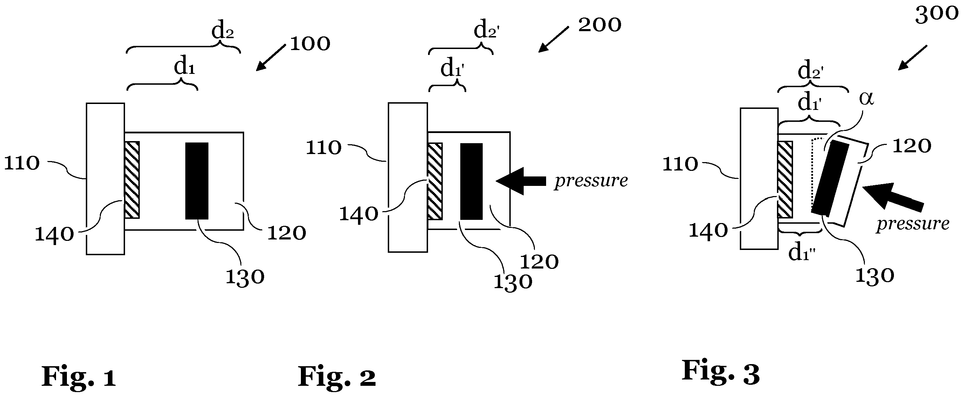

Figure 1 depicts a section view of a soft sensor element 100 according to an embodiment example of the invention. The soft sensor element 100 comprises a sensor 140, a deformable element 120, and an element 130 for reacting with the sensor 140. The sensor 140 may be arranged on a printed circuit board 110. For example, the deformable element 120 may comprise at least one of an elastomer, a polymer, a rubber and a vulcanizate. The deformable element 120 may also comprise a flexible element, an elastic element or a flexible structure. The flexible element or the flexible structure may be made of metal. For example, the flexible element or the flexible structure may be a made of metallic flexible beams. In the here shown embodiment example, the element 130 is fully embedded in the deformable element 120. Fully embedded means that the deformable element 120 is completely surrounding the element 130, which means all surfaces of the element 130 are in contact with the deformable element 120. It can also be said that the element 130 is enveloped by the material of the deformable element 120. While the element 130 for reacting with the sensor in some embodiments may be embedded fully in the deformable element 120, the element 130 may only be partially embedded in the deformable element 120 in other embodiments. For example, there may be a cavity within the deformable element 120 and a portion of the element 130 may be located adjacent to or within the cavity.

The deformable element 120 is deformable by applying an external force. The applied external force may cause the deformable element 120 to be compressed such that the distance between the element 130 and the sensor 140 changes. This change in distance can be detected by the sensor 140. For example, if the element 130 is a magnet and the sensor 140 is a magnetic sensor, then the reduction in distance between the element 130 and the sensor 140 causes the sensor to detect a different magnetic field, e.g. a different magnetic field strength and/or orientation/direction as compared to before the deformation. Hence, from a change in the measured physical unit, it can be deducted how much the deformable element 120 is deformed. The person skilled in the art will however notice that also other types of sensor 140/element 130 combinations can be used for measuring the amount of distance the deformable element 120 has been compressed.

Each individual deformation of the deformable element 120 corresponds to a different applied external force, which in turn is associated with a respective physical measurement obtained by the sensor 140. Hence, a correlation between applied external force values and corresponding measurement values of the sensor 140 exists. This correlation can be determined during an initial calibration step of the sensor 140 or can be predetermined by knowing the Young's modulus and/or a shear modulus of the deformable element 120. The correlation itself can, for instance, be established as a look-up table including external force values and their associated sensor readings. The correlation between applied external force values and corresponding measurement values of the sensor 140 could be established using a model trained by machine learning. A person skilled in the art also knows other ways to establish the respective correlations, all of which are encompassed hereby. Once an actual measurement of the sensor 140 is obtained, the look-up table can be used to infer an estimate for the external force. However, by knowing the Young's modulus and/or the shear modulus of the deformable element 120 also an algorithm can be used, which outputs the actual force applied in respect to the amount of deformation by ease of calculation. The algorithm may be a non-linear model, which defines the actual force as a non-linear function of the measurement values of the sensor 140. The algorithm or the correlation may be implemented inside an integrated circuit (IC) containing the sensor 140, or outside the integrated circuit containing the sensor 140, or partially inside the integrated circuit containing the sensor 140 (e.g. for calculating the position of the element 130 from the sensor signal), and partially outside the integrated circuit containing the sensor 140 (e.g. for inferring the force from the displacement of the element 130). The sensor 140 may be configured to provide dual sensing, which allows detection of linear forces as well as shear forces, for example a linear force in the direction of the external force and shear forces in one direction or two orthogonal directions in the plane perpendicular to the direction of the external force. The correlation or the algorithm may provide a direct link between the applied external force values and the measurement values of the sensor 140. Optionally, the correlation or the algorithm may compute the displacement of the element 130 as an intermediate step. In this case, a first correlation or a first algorithm determines the position of the element 130 from the measurement values of the sensor 140, and a second correlation or a second algorithm determines the applied external force value from the position of the element 130. Thus, in this case, the determining the position of the element 130 acts as an intermediate step.

The element 130 embedded within the deformable element 120 has in the here shown embodiment example a distance, d₁, from the sensor 140, which is smaller than the distance, d₂, of the second end of the deformable element 120 from the sensor 140.

In a not limiting sense, the distance, d₁, of the element 130 from the sensor 140 may be 3mm, the distance, d₂, of the second end of the deformable element 120 from the sensor may be 4mm A person skilled in the art knows that these dimensions are only named for illustrative purposes and shall not be understood to be limiting if not explicitly mentioned.

Figure 2 shows a section view of the soft sensor element 200 of Figure 1 with an applied external force. The applied external force can be uniform, i.e., constant over a surface of application of the force. However, the applied external force can also be non-uniform, i.e., varying over the surface of application of the force. This variation of the force over the surface of application may be linear or non-linear. In other words, each point on the surface of application of the force may be assigned a different force value, which is related to the neighboring force values according to a linear or a non-linear relationship. In the shown example, the external force is uniform over the surface of the deformable element 120 and applied perpendicularly to the surface of the sensor 140. The applied external force compresses the deformable element 120. This causes the distance, d₂, of the second end of the deformable element with respect to the sensor 140 to be reduced to a shorter distance, d_{2'}. Due to the fact that the element 130 is embedded in the deformable element 120 also the distance, d₁, of the element 130 to the sensor 140 is reduced to a shorter distance, d_{1'}.

The sensor 140 is configured to detect the change of distance, di to d_{1'}, by reacting with the element 130. If the sensor 140 is a magnetic sensor and the element 130 is a magnet, then the lower distance between the sensor 140 and the element 130 causes the sensor 140 to detect a higher magnetic field strength, since it is proportional to the distance. The change in magnetic field strength as such allows to conclude the force applied to the deformable element 120. In some cases, if the sensor 140 is a magnetic sensor, it is possible that the sensor 140 detects, additionally or alternatively to the magnetic field strength, a change of orientation/direction of the magnetic field strength vector, i.e., of one or more angles assigned to the magnetic field vector. In this case, the magnetic sensor may be located at an offset with respect to the axis of the magnet. Whereas here only a one-dimensional distance measurement and as such a perpendicularly applied force is described, the person skilled in the art will notice that the element 130 may also be inclined at an angle as shown in Figure 2b.

In Figure 3, the external force is applied uniformly but not perpendicular to the surface of the sensor 140. Hence, the applied external force deforms the deformable element 120 in a direction not perpendicular to the surface of the sensor 140. This causes the distance, d₁, of the element 130 to the sensor 140 to be changed in a non-homogeneous way. For example, the upper end of the element 130 is moved to a larger distance, d_{1'}, but the lower end of the element 130 is moved to a lower distance, d_{1"}. Since the distances d_{1'} and d_{1"} are different if a non-linear force is applied, the element 130 is tilted by a non-zero angle α with respect to the sensor 140. Thus, with a non-perpendicular external force the element 130 is not only translated, but also rotated. The sensor 140 is adapted to detect the change of the angle α by the reaction with the element 130. If the sensor 140 is a magnetic sensor and the element 130 is a magnet, the different angle α between the sensor 140 and the element 130 causes the sensor 140 to detect a different magnetic field, since the orientation of the magnetic field lines of the magnet 130 has been changed with respect to the sensor 140. It could also be said that the rotation of the element 130 by the angle α causes the sensor 140 to perceive a rotated three-dimensional magnetic field from the element 130. Under rotations, the absolute magnetic field strength does not change but the orientation of the magnetic field vector in space is changed. Hence, the sensor 140 perceives different magnetic fluxes as compared to no rotation of the element 130, since the projections of the magnetic field vector onto the surfaces, over which the sensor 140 measures the magnetic fluxes, are different. The change in the measured magnetic fluxes allows to infer the change of the position of the element 130. The positional change of the element 130 is uniquely linked to the force exerted onto the deformable element 120. Hence, if a non-perpendicular force is applied to the deformable element 120, a rotation of the element 130 could be used to determine the force applied to the deformable element 120.

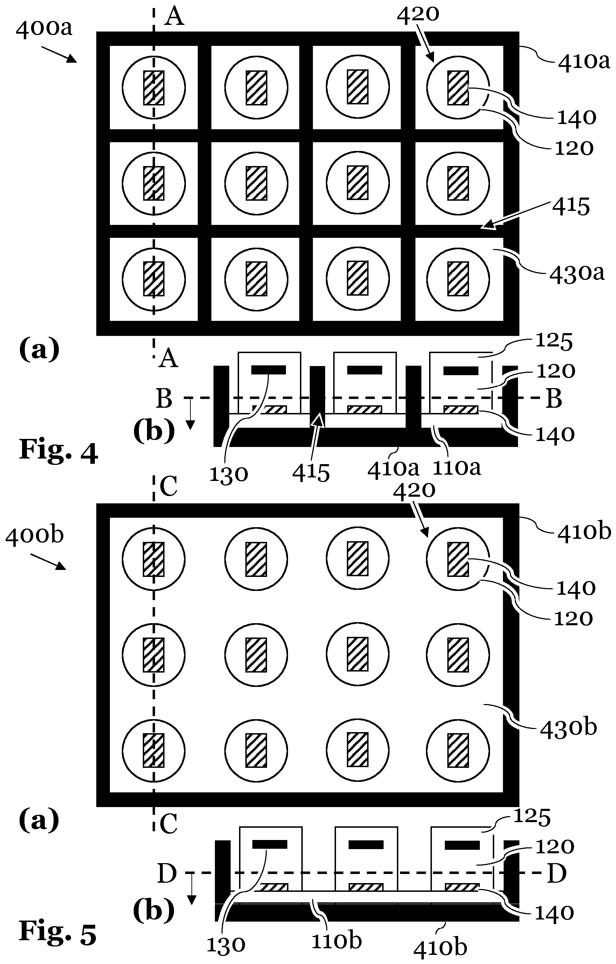

Figure 4 shows cross-sectional views along perpendicular planes of a first embodiment example of a sensor arrangement.

The sensor arrangement is generally shown at 400a. The sensor arrangement 400a comprises a body 410a and a plurality of soft sensor elements 420, wherein each of the soft sensor elements 420 comprises a deformable element 120, a sensor 140 and an element 130 for reacting with the sensor 140. The element 130 may be embedded in the deformable element 120 as illustrated in figure 4 (b). Figure 4 (b) illustrates the cross-section of the sensor arrangement 400a along the line A-A in figure 4 (a), whereas the plane of the cross-sectional view in figure 4 (a) is along line B-B in figure 4 (b).

The plurality of soft sensor elements 420 of the sensor arrangement 400a are arranged in a grid. While the depicted embodiment example of the sensor arrangement 400a comprises twelve soft sensor elements 420 arranged in four columns having three rows each, the skilled person will appreciate that the number of soft sensor elements 420 that is shown is for illustrative purposes and the disclosure is not limited to this particular number. Also the specific arrangement of the soft sensor elements 420 in a rectangle is only for illustrative purposes and it is evident that also other shapes may be used.

The body 410a illustrated in figure 4 comprises a series of pillars 415, which separates adjacent soft sensor elements 420 from one another. This way, the pillars 415 form clearances 430a and one of the soft sensor elements 420 is located in each clearance 430a. These clearances 430a may also be referred to as openings. Again, the skilled person will appreciate that this configuration does not limit the scope of this disclosure. In other embodiment examples, more than one soft sensor element 420 may be arranged in one of the clearances 430a that is formed between the pillars 415.

As can be seen in the cross-sectional view in figure 4 (b), the soft sensor elements extend from the clearances 430a beyond the height of the pillars 415. A top portion of the soft sensor element forms a contact portion 125 of the soft sensor element 420. The contact portion 125 of the soft sensor element 420 is a portion of the deformable element 120 where the force is applied during a force measurement as is illustrated in figures 1 to 3. As can be seen from the cross-sectional view in figure 4 (b), the contact portion 125 of the soft sensor element 420 is located outside of the clearance 430a (when no force is acting on the top portion 125). This way, the body 410a only affects the deformation of the soft sensor elements 420a when a maximum deformation is reached due to a force threshold being reached.

The embodiment example of the sensor arrangement 400a illustrated in figure 4 may be manufactured by directly overmolding the sensor elements without using a rigid cover, but may be manufactured by using a frame during the molding process in order to form the clearances and protect the soft sensor elements during the molding process. The pillars 415 in the here shown embodiment example form openings in the body 410a.

Figure 5 shows cross-sectional views along perpendicular planes of a second embodiment example of a sensor arrangement. Figure 5 (b) illustrates the cross-section of the sensor arrangement 400b along the line C-C in figure 5 (a), whereas the plane of the cross-sectional view in figure 5 (a) is along line D-D in figure 5 (b).

Compared to the embodiment example 400a of the sensor arrangement illustrated in figure 4, the sensor arrangement 400b illustrated in figure 5 does not comprise pillars 415. Instead, the body 410b forms a single clearance 430b and all soft sensor elements 420 of the sensor arrangement 400b are arranged in the clearance 430b. In this case, the body portion 410b limits the deformation of the deformable elements 120 of the soft sensor elements 420.

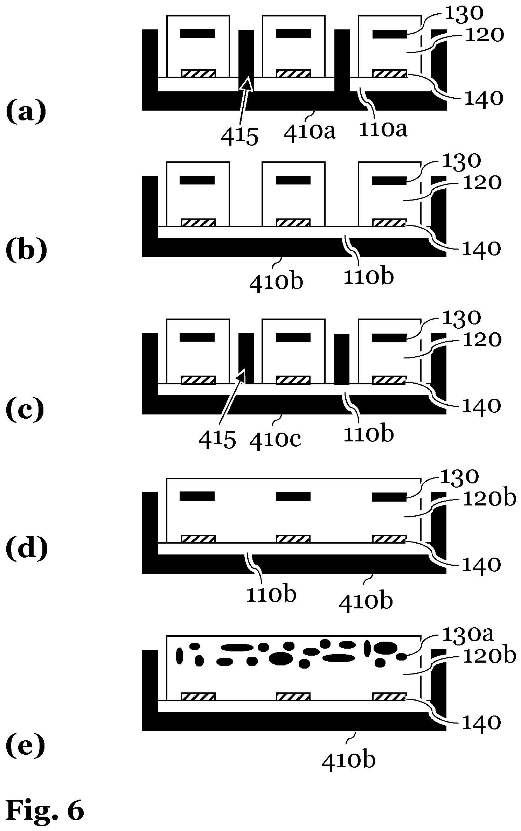

As can be seen in the cross-sections in figures 4 (b) and 5 (b), the soft sensor elements 420 may be arranged on a printed circuit board (PCB) 110a each (figure 4 (b)) or the soft sensor elements 420 may be arranged on the same PCB 110b (figure 5 (b)). In some embodiment examples, a common PCB 110b may also be used in combination with pillars 415 as is illustrated in figure 6 (c).

Figure 6 shows cross-sectional views of different embodiment examples of a sensor arrangement. The cross-sectional views in figures 6 (a) to (e) may be similarly oriented as the cross-sectional views in figures 4 (b) and 5 (b).

Figure 6 (a) corresponds to the cross-sectional view of figure 4 (b) and illustrates a sensor arrangement with soft sensor elements on individual PCBs and with a body 410a having a plurality of pillars 415 to separate the soft sensor elements. The space between two pillars 415 forms the opening in the body 410a.

Generally, the deformable element 120 of a sensor element may be attached to the respective PCB 110a by ease of an adhesive. Furthermore, in embodiments, which are not shown in the drawings, the deformable element 120 may be arranged directly on the sensor 140 and does not necessarily contact the PCB 110a. In these embodiments, the deformable element 120 may be attached to a respective sensor 140 by ease of an adhesive.

Figure 6 (b) corresponds to the cross-sectional view of figure 5 (b) and illustrates a sensor arrangement with soft sensor elements on a common PCB and with a body 410b without pillars 415, but with two pillars at the end portions of the body 410a.

Figure 6 (c) illustrates a cross-sectional view of a sensor arrangement with soft sensor elements on a common PCB 110b and with a body 410c comprising pillars 415. In this embodiment example, the body 410c of the sensor arrangement may be manufactured by overmolding the soft sensors elements and the common PCB.

During the overmolding, the pillars 415 are formed by filling gaps between deformable elements 120 of the soft sensor elements, whereas the remainder of the body 410c is formed by overmolding the common PCB. In order to protect the soft sensor elements during the molding process, a frame (not shown) may be used to form the molding material into the desired shape and to create clearances between the soft sensor elements and the molding material.

Figure 6 (d) illustrates a cross-sectional view of a sensor arrangement with soft sensor elements on a common PCB 110b. In this embodiment example, the soft sensor elements share a common deformable element 120b. As the common deformable element 120b connects adjacent sensor elements, there are no clearances between the sensor elements and therefore no pillars. In this case, the body 410b of this embodiment example may be similar to the body 410b illustrated in figure 5 and 6 (b).

In figure 6 (d), the common deformable element 120b does not contact the body 410b of the sensor arrangement, as is indicated by the gap between the edges of the common deformable element 120b and the body 410b. However, in some embodiments, the common deformable element 120b may directly contact the body 410b. In these cases, the body may hold the deformable element 120b in place relative to the sensors 140 arranged on the PCB 110b. In these cases, the deformable element may not necessarily be connected to the PCB by an adhesive.

Figure 6 (e) illustrates a cross-sectional view of a sensor arrangement with soft sensor elements on a common PCB 110b. Also in this embodiment example, the soft sensor elements share a common deformable element 120b. However, contrary to the pairwise arrangement of sensors 140 and elements 130 for reacting with the sensors of figure 6 (d), the embodiment example of figure 6 (e) comprises a plurality of magnetic particles 130a (magnetic powder) distributed within the deformable element 120b. In some embodiments, the concentration of the magnetic particles may be homogenous, whereas in other embodiments, the concentration may be inhomogeneous, e.g. having higher concentration in areas where the sensors 140 are located.

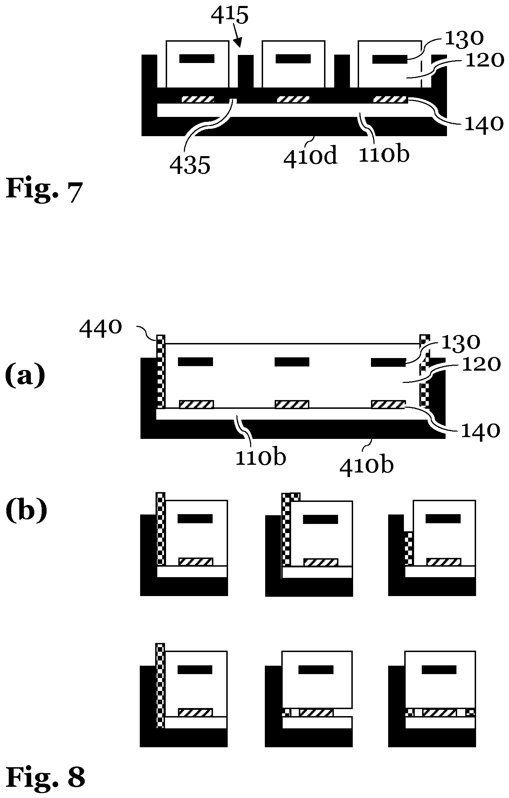

Figure 7 shows a cross-sectional view of another embodiment example of a sensor arrangement with an overmolded printed circuit board.

In the embodiment example depicted in figure 7, the PCB is overmolded with mold material and the deformable elements 120 including the at least partially embedded elements 130 for reacting with the sensors 140 are attached to the mold material after overmolding of the PCB. In this manner, a barrier 435 is formed between the deformable elements 120 and the sensors 140 arranged on the PCB 110b. The barrier 435 made from mold material may directly contact the sensors 140 on the PCB 110b as illustrated in figure 7, but in some examples, a cavity may form, which separates the barrier 435 from the sensors 140 by a distance. The barrier 435 made of mold material may provide additional protection to the sensors. Furthermore, in some application examples, wear acting on the deformable elements 120 may be high, thereby reducing the lifetime of the deformable elements 120 relatively to the lifetime of the sensors 140. In these examples, the deformable elements 120 and the elements 130 for reacting with the sensors that are at least partially embedded in the deformable elements 120 may be replaced, which prolongs the lifetime of the sensor arrangement to the lifetime of the sensors 140.

Figure 8 shows cross-sectional views of different embodiment examples of a sensor arrangement with a support structure. In figure 8 (a) a cross-sectional view of an embodiment example of a sensor arrangement is depicted in a similar manner as in figures 4 (b), 5 (b), and 6 (a) to (e). The embodiment example depicted in figure 8 (a) is similar to the embodiment example depicted in figure 6 (d) with an additional support structure 440. The support structure may be part of the body of the sensor arrangement and may provide additional support for the sensor arrangement during operation and/or during manufacturing. For example, the support structure may act as a frame during the molding process of the manufacturing method, but compared to the frame it is not removed from the sensor arrangement after manufacturing.

Figure 8 (b) illustrates further embodiment examples of a sensor arrangement with a support structure in a cross-sectional view, however compared to figure 8 (a) only a portion of the cross-section is shown. As can be seen, the support structure 440, which is illustrated in checkerboard pattern can extend beyond the upper portion of the body 410b (upper row of figure 8 (b), left image), may cover a portion of the top portion of the soft sensor element (upper row of figure 8 (b), middle image), or may not extend beyond the upper portion of the body 410b (upper row of figure 8 (b), right image).

Further, the support structure may also contact the printed circuit board 110b of the soft sensor element(s) (regardless of whether the two or more soft sensor elements share a common PCB or not), which is illustrated in the lower row of the images in figure 8 (b). For example, the support structure, which is again illustrated in checkerboard pattern, may cover the entire side of the PCB and the deformable element (lower row of figure 8 (b), left image). In this case, the support structure may provide protection to the PCB during the molding process.

In other embodiments, the support structure may be placed on the PCB in order to provide protection for the sensors arranged on the PCB. In this case, the support structure may be located at the edges of the device (i.e. the locations where the molding material is located) (see lower row of figure 8 (b), middle image) or the support structure may additionally extend between adjacent sensors (see lower row of figure 8 (b), right image) - in this case, either a support structure may form a grid extending between the sensors and around the sensors or multiple support structures may be used that each only cover a small area of the PCB.

In any of the cases illustrated in figure 8, the support structure may comprise protrusions and/or recesses in order to increase the ability of the mold material to attach to the support structure.

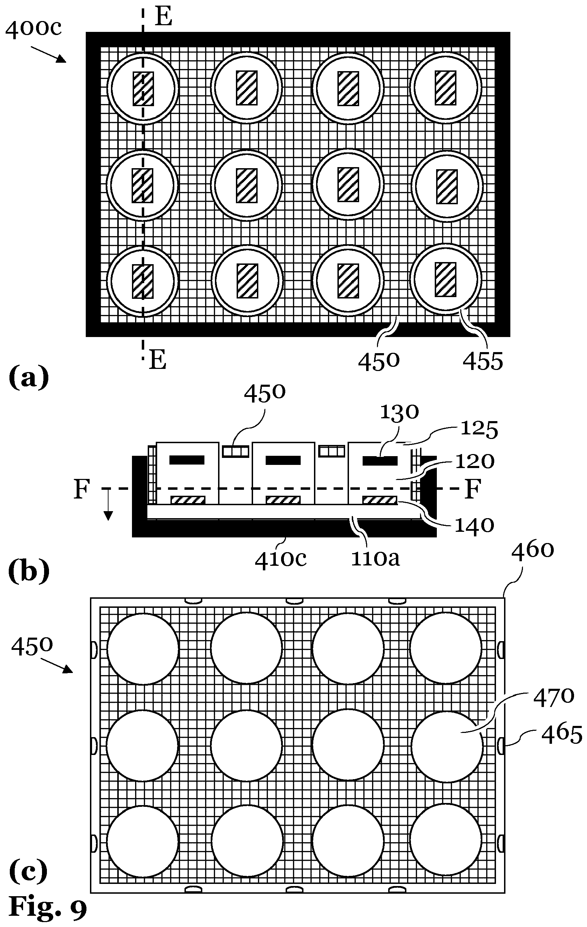

Figure 9 shows cross-sectional views along perpendicular planes of a third embodiment example of a sensor arrangement and (c) a detail view of a cover of the sensor arrangement according to the third embodiment example.

The sensor arrangement is generally shown at 400c. The sensor arrangement 400c comprises a body 410c and a plurality of soft sensor elements 420, wherein each of the soft sensor elements 420 comprises a deformable element 120, a sensor 140 and an element 130 for reacting with the sensor 140. The element 130 may be embedded in the deformable element 120 as illustrated in figure 9 (b). Further, the body of the sensor arrangement comprises a rigid cover 450. Figure 9 (b) illustrates the cross-section of the sensor arrangement 400c along the line E-E in figure 9 (a), whereas the plane of the cross-sectional view in figure 9 (a) is along line F-F in figure 9 (b). Further, figure 9 (c) illustrates a top view of the rigid cover 450.

The rigid cover comprises openings 470 - preferably one opening for each of the soft sensor elements, but in some embodiment examples more than one soft sensor element may be arranged in a single opening, thereby reducing the number of openings 470. When the sensor arrangement is assembled, the soft sensor elements reach at least partially through the openings as is illustrated in figure 9 (b), wherein the contact portion 125 of the soft sensor elements reaches through the opening to the outside of the body of the sensor arrangement. Preferably, there is a gap 455 between the openings 470 and the soft sensor elements in order to reduce wear of the soft sensor elements during force measurements.

As is illustrated in figure 9, the body of the sensor arrangement may be formed by the rigid cover 450 and mold material 410c, which may at least partially overmold the rigid cover and the soft sensor elements (e.g. their PCB). An edge portion 460 of the rigid cover 450 may comprise one or more protrusions and/or recesses 465. The protrusions and or recesses may be located on the top side of the rigid cover 450 (i.e. the side that faces away from the soft sensor elements; i.e. the top side in figure 9 (b)). In this case, the protrusions and/or recesses 465 may be used to increase the ability of the mold material to attach to the rigid cover 450. In some other embodiment examples, the protrusions and/or recesses may be located at the bottom side (i.e. the side that faces towards the soft sensor elements) and may be used to align the rigid cover and the soft sensor elements. For example, the one or more PCBs to which the soft sensor elements may be attached may comprise recesses and/or protrusions (i.e. inverse structures to the protrusions and/or recesses of the rigid cover) that may meshingly engage with the protrusions and/or recesses of the rigid cover.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the scope of the appended claims.

## Claims

1. A sensor arrangement (400a-c) for measuring a force, comprising:
two or more soft sensor elements (100, 200, 300, 420);
a body (410a-d), wherein the two or more soft sensor elements (100, 200, 300, 420) are at least partially located within the body (410a-d) and wherein the body (410a-d) comprises one or more openings (430a-b, 470), wherein a contact portion of each of the two or more soft sensor elements (100, 200, 300, 420) extends through the one or more openings (430a-b, 470) in the body (410a-d), and wherein the body (410a-d) is at least partially made of a material limiting the deformation of the contact portion of each of the two or more soft sensor elements (100, 200, 300, 420) when a force is applied to the sensor arrangement (400a-c).

2. The sensor arrangement according to claim 1, wherein the two or more soft sensor elements (100, 200, 300, 420) form an array.

3. The sensor arrangement according to any of the preceding claims, wherein each of the soft sensor elements (100, 200, 300, 420) comprises:
a sensor (140);
a deformable element (120), wherein the deformable element (120) is deformable by the force; and
at least one element (130) for reacting with the sensor (140) for measuring the force by a deformation of the deformable element (120), wherein the deformable element (120) extends at least partially between the sensor (140) and the at least one element (130).

4. The sensor arrangement according to claim 3, wherein the at least one element (130) for reacting with the sensor (140) is embedded into the deformable element (120).

5. The sensor arrangement according to any of claims 3 and 4, wherein the deformable element (120) is made out of at last one of an elastomer, a polymer, a rubber and a vulcanizate.

6. The sensor arrangement according to any of claims 3 to 5, wherein the at least one element (130) for reacting with the sensor (140) of the two or more soft sensor elements (100, 200, 300, 420) is formed by a magnetic material.

7. The sensor arrangement according to any of the preceding claims, wherein the two or more soft sensor elements (100, 200, 300, 420) are arranged on a printed circuit board, PCB, (110, 110a, 110b).

8. The sensor arrangement according to any of the preceding claims, wherein the two or more soft sensor elements (100, 200, 300, 420) located at least partially within the body (410a-d) are surrounded by a support structure (440), which is located at least partially within the body (410a-d).

9. The sensor arrangement according to any of claims 1 to 8, wherein the body (410a-d) is made of a mold material.

10. The sensor arrangement according to any of claims 1 to 8, wherein the body (410a-d) comprises a rigid cover (450), which is overmolded with a mold material.

11. The sensor arrangement according to claim 10, wherein the rigid cover (450) comprises one or more recesses and/or one or more protrusions (465).

12. A method for manufacturing a sensor arrangement (400a-c), comprising:
providing two or more soft sensor elements (100, 200, 300, 420); and providing a body (410a-d) of the sensor arrangement (400a-c) and arranging the two or more soft sensor elements (100, 200, 300, 420) at least partially inside the body (410a-d), wherein the body (410a-d) comprises one or more openings (430a-b, 470); and
wherein a contact portion of each of the two or more soft sensor elements (100, 200, 300, 420) extends through the one or more openings (430a-b, ims 470) in the body (410a-d), and wherein the body (410a-d) is at least partially made of a material limiting the deformation of the contact portion of each of the two or more soft sensor elements (100, 200, 300, 420) when a force is applied to the sensor arrangement (400a-c).

13. The method according to claim 12, wherein the two or more soft sensor elements (100, 200, 300, 420) are provided on a printed circuit board, PCB, (110, 110a, 110b).

14. The method according to any of claims 12 and 13, wherein the step of providing the two or more soft sensor elements (100, 200, 300, 420) comprises providing two or more soft sensor elements (100, 200, 300, 420), each of the soft sensor elements (100, 200, 300, 420) comprising:
a sensor (140);
a deformable element (120), wherein the deformable element (120) is deformable by the force; and
at least one element (130) for reacting with the sensor (140) for measuring the force by a deformation of the deformable element (120), wherein the deformable element (120) extends at least partially between the sensor (140) and the at least one element (130).

15. The method according to any of claims 12 to 14, wherein the step of providing the body (410a-d) and arranging the two or more soft sensor elements (100, 200, 300, 420) at least partially inside the body (410a-d) comprises:
relatively arranging the two or more soft sensor elements (100, 200, 300, 420) and at least one of a rigid cover (450) and a support structure (440), wherein, if the rigid cover (450) is present, the rigid cover (450) comprises one or more openings (430a-b, 470) and the contact portion of the two or more soft sensor elements (100, 200, 300, 420) extends through the one or more openings (430a-b, 470) and wherein, if the support structure (440) is present, the support structure (440) at least partially surrounds an edge portion of the two or more soft sensor elements (100, 200, 300, 420), and
overmolding the rigid cover (450) and/or the support structure at least partially with a molding material;
or
relatively arranging the two or more soft sensor elements (100, 200, 300, 420) and a frame,
creating a body (410a-d) of the sensor arrangement (400a-c) from a mold material, and
removing the frame from the sensor arrangement (400a-c).
